# EUROPEAN PATENT APPLICATION

(11) **EP 4 711 561 A1**
(43) Date of publication of application: **18.03.2026**
(21) Application number: 25202024.3
(22) Date of filing: 12.09.2025
(51) Int. Cl.: E05B 15/16, E05B 17/00, E05B 67/06, E05B 67/38, B22F 10/80, B33Y 10/00, B33Y 50/00

(54) **METHOD OF METALLURGICALLY BONDING**

(30) Priority: 16.09.2024 GB 202413599
(71) Applicant: Zeal Innovation Ltd, Swansea SA5 4DE (GB)
(72) Inventor: BARRON, Neil, Swansea (GB)
(74) Representative: Marks & Clerk LLP

(57) **Abstract**

A method of metallurgically bonding a plurality of tracks to a surface of an elongate metallic body comprising bonding a first track to the surface of the elongate metallic body, the first track extending between a first initial area and a first terminal area; bonding a second track to the surface of the elongate metallic body, starting from a part of the elongate body that includes the first terminal area and moving toward the area comprising the first initial area.

## Description

Embodiments described herein relate to the application of cut-resistant materials on a metallic elongate body of a security device.

In conventional bonding techniques, particularly those used for reinforcing or building up metal components, such as welding, laser welding or laser cladding, plasma arc welding or brazing, tracks are typically welded in continuous or overlapping sequences. Such techniques may lead to localized heat concentration, causing thermal stresses, distortion, or even degradation of the material properties in the affected areas. This is especially critical when welding on cylindrical components such as metal rods, where repeated thermal cycling can exacerbate these effects.

There is therefore a need for an improved deposition welding method that distributes heat evenly and minimizes the risk of warping, material fatigue, or cracking.

According to an embodiment there is provided a method of metallurgically bonding a plurality of tracks to a surface of an elongate metallic body comprising bonding a first track to the surface of the elongate metallic body, the first track extending between a first initial area and a first terminal area, bonding a second track to the surface of the elongate metallic body, starting from a part of the elongate body that includes the first terminal area and moving toward the area comprising the first initial area.

In an embodiment the first initial area and the first terminal area are at opposite ends of the elongate metal component along a longitudinal direction thereof.

In an embodiment the elongate body is cylindrical or has an oval cross-section.

In an embodiment the second track is applied to a side of the elongate body that is diametrically opposite from a side of the elongate body to which the first track has been applied.

In an embodiment the tracks are further applied so that some or all of the tracks overlap with a track that had previously been applied.

In an embodiment the tracks are applied so that substantially an entire surface of the elongate body is covered by tracks.

In an embodiment the elongate metallic body is a shackle of a security device.

In an embodiment the tracks are applied so that substantially an entire surface of the elongate body exposed to the potential of an angle grinder attack is covered by tracks.

In one embodiment a part of the shackle that is received in a lock body when the lock is in a closed state is not covered by the tracks.

In an embodiment where the shackle is bent in a two-dimensional shape, such as a U-shape, areas of the shackle on an inside of the U-shape that are not susceptible to an angle grinder attack, for example, because the spacing between the 'legs' of the U-shaped shackle are spaced apart too closely for a standard 115mm angle grinder disk to be inserted between the legs for access to the un-plated areas.

According to another embodiment there is provided a method of metallurgically bonding a plurality of tracks to a surface of an elongate metallic body comprising bonding a first track to the surface of the elongate metallic body, the first track extending between a first initial area and a first terminal area, bonding a second track to the surface of the elongate metallic body, starting from a part of the elongate body that includes the first initial area and moving toward the area comprising the first terminal area.

In an embodiment there is further provided a security device comprising an elongated component made using a method as described hereinbefore.

In an embodiment the security device is a padlock, a D-lock, a U-Lock or a single leg stud type locks.

In an embodiment there is further provided a computer-readable medium storing data which defines a digital representation of the security device described hereinbefore.

In an embodiment the computer-readable medium further stores computer program instructions configured to cause an additive manufacturing machine to apply the plurality of tracks to the elongate metallic body when executed by the additive manufacturing machine.

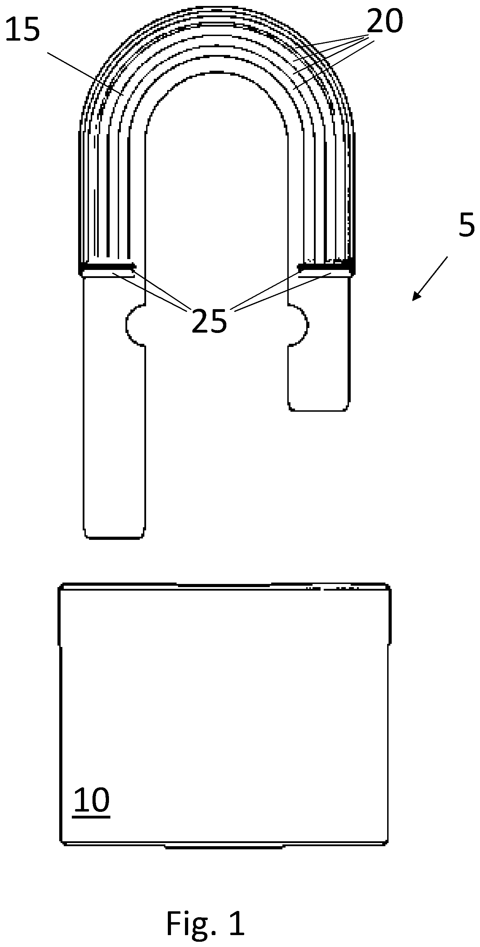

Figure 1 shows an explosion view of a padlock comprising a plated shackle.

In embodiments one or more layers of material are applied on an existing metal component using a thermal process, such as welding, laser welding or laser cladding, plasma arc welding or brazing. In embodiments the material is cermet; tungsten carbide; titanium carbide; titanium nitride, and titanium carbon nitride. It is known to use a material such as tungsten carbide to form a wear resistant layer on a surface. Tungsten carbide particles, for example, are in one embodiment, dispersed in a self-fluxing matrix or alloy based on nickel, iron or cobalt in composition with chromium, silicon and boron as discussed in a conference paper entitled "High temperature erosion wear of cermet particles reinforced self-fluxing alloy matrix HVOF sprayed coatings" published in Materials Science in September 2015. Products bearing such layers or coatings are available from various companies such as ASB Industries Inc. of Barburton, Ohio, USA; B&B Precision Engineering of Huddesfield, UK, and Oelikon Metco of Pfafficon, Switzerland.

In the process the material is applied in one or more locations at a given time, with the location changing over time, so that tracks of the metal material are formed on the existing metal component. The localised application of heat to the existing metal component is known to cause local expansion of the metal component. As equivalent expansion does not occur in other parts of the existing metal component, the component is likely to deform. This makes continued application of further metal material to the component more difficult, in particular if an automated process that seeks to apply the metal material to an existing metal component of known existing (undistorted) shape and position is used. Moreover, if the material applied to the metal component has a different thermal expansion coefficient from the existing metal component, then the more cooling both materials undergo after the material has been applied to the existing metal component, the more tension is created between the two materials.

In embodiments, the existing metallic component is an elongate component, i.e. a component that is significantly longer than it is wide. The base material/existing metal component is a metal rod, typically composed of steel or other alloys suitable for welding. In an embodiment, the rod is a U-shaped shackle in a security device such as a padlock, D-lock, U-Lock commonly used for cycles and motorcycles or single leg stud type locks in which only a single end of an elongate member is locked into a lock body. Shackles of security devices of embodiments are cylindrical in cross-section. In other embodiments other cross-sections, such as oval, polygonal or, more specifically, rectangular or square are used. Preferably the elongate component has a length to diameter ratio of greater than 8, preferably greater than 10 and most preferably greater than 15. The length of the elongate component is the straight length of the component. For example, the length of a U-shaped shackle is the length of the shackle when measured along the longitudinal axis of the shackle, i.e. the length the elongate component had before having been bent into its U-shape.

The base material is mounted in a jig for applying the material. In one embodiment, the material is then automatically applied to the base material in tracks that, in one embodiment, combine to continuously cover some or all of the surface of the base material. In another embodiment the tracks are spaced apart from each other, leaving some surface of the base material exposed in gaps between the tracks.

The material is a cut-resistant material in some embodiments. The material has particles of a hard cut-resistant material that may be dispersed in a self-fluxing matrix of lower melting point than that of the body and comprising one of nickel, iron and cobalt in composition with chromium, silicon and boron. The tracks are applied to the elongate body by welding, preferably laser welding or laser cladding, but plasma arc welding or brazing might also be used. The lower melting point prevents melting of the elongate body while enabling a metallurgical bond between the applied material and the elongate body. Tungsten carbide is the preferred hard cut-resistant material, but other materials might be used, such as silicon carbide, cubic boron nitride, or industrial or synthetic diamond.

Preferred matrices used in the track material in devices of the invention are based on nickel or cobalt, ideally with a hardness of around 50-60 HRC (Rockwell C hardness). Particularly preferred matrices are based on nickel with the optional inclusion of iron. In the matrix forming the tracks in elements of the invention the hardness of the cut-resistant particles is preferably in the range 2500 to 3000Hv (Vickers Hardness), and that of the matrix 500 to 600Hv.

A welding torch or deposition head is used to apply the cut-resistant material onto the surface of the elongate metallic body in a series of tracks, such as linear tracks.

In an embodiment a first weld track is applied by moving the point of deposition in a direction that includes the longitudinal direction of the component to which the track is applied from a starting point to an end point. In one embodiment the starting point is proximate a first end of the elongate base component and the end point is proximate an opposite end of the elongate base component. It will be appreciated that, if the elongate component is part of a lock, such as a shackle of the above mentioned D-Lock, U-Lock or padlock, or a stud of the above mentioned single leg stud type lock, then one or both ends of the elongate component are received in a lock body. In this case, the tracks are, in one embodiment, not applied to one or both of the ends of the elongate component, given that it is less likely that enhanced cut resistance is required in areas of the elongate component that is, in the locked state of the lock, received in the lock's body.

As discussed above, as the first track is applied, heat is deposited in the elongate body locally. For this reason the tracks are applied by moving the location of material application in a direction that at least partially includes a component that extends in the longitudinal direction of the elongate component. In one embodiment this means that the deposition direction is the longitudinal direction of the elongate component. In this way increase in temperature is spread along parts or all of the length of the elongate component, rather than concentrating temperature increase and the associated distortion on a short section of the elongate component.

In an embodiment, a second track of the material is applied starting from the part of the elongate body comprising the end of the first track and moving toward the area of the elongate body that comprises the starting point of the first track. Put in other words, the second track is applied in a direction opposite to the direction of application of the first track. In this manner, the time available for cool down of the area at the start of the first track is maximised. In an embodiments the application direction of the tracks alternates between tracks, so that the time available for cool down of the area at the start of any given track is maximised.

In an alternative embodiment in which the time required for applying a single track is deemed sufficient for the area at the start of the track to cool down by the desired temperature, the direction of application of the tracks is the same for all tracks. Put in other words, deposition of all of the tracks start at the same end of the elongate body for more than half and preferably all of the tracks and ends at the opposite end of the elongate body for more than half and preferably all of the tracks.

It was noted that application of heat to one side of the metal elongate component can cause bending of the elongate component through expansion of the metal component on the side at which the heat is applied. To reduce the amount of bending caused by this effect tracks are alternately applied to different sides of the elongate component, to ensure similar rates of heating, and with this of thermal expansion, of both sides of the elongate component.

Fig. 1 shows a padlock 5 of an embodiment, with a padlock body 10 and a shackle 15. Provided on the surface of the shackle 15 are tracks 20 and 25 of cut resistant material, such as the cut resistant material described above. The tracks 25 are optional.

As can be seen, the ends of the shackle 15 that will be received in the lock body 10 are not armoured. This does not compromise the security of the lock 5, given that cutting these sections of the shackle 15 is more difficult than cutting the sections outside of the body 10 of the lock 5. As can be seen from Fig. 1, the tracks 20 of cut resistant material extend along the longitudinal direction of the shackle. In other embodiments the tracks do not extend exactly parallel to the longitudinal direction of the shackle as long as the area in which material is deposited moves from one end of the shackle towards the other end of the shackle.

Although not discernible from the figure, the tracks have been applied to the shackle in the above described fashion, namely by alternating the direction of application of the tracks between tracks.

It will be appreciated by a person skilled in the art that variations and/or modifications (e.g., additions, omissions, substitutions, etc.) may be made to the described and/or illustrated embodiments to provide other embodiments. The described and/or illustrated embodiments should therefore be considered in all respects as illustrative, not restrictive. Other features and aspects of the disclosure will become apparent by consideration of the detailed description and accompanying drawings. Any feature(s) described herein in relation to one aspect or embodiment may be combined with any other feature(s) described herein in relation to any other aspect or embodiment as appropriate and applicable. As used herein, term of degree such as "generally", "about", "substantially", or the like, are used, depending on context, to account for manufacture tolerance, degradation, trend, tendency, imperfect practical condition(s), etc.

## Claims

1. A method of metallurgically bonding a plurality of tracks to a surface of an elongate metallic body comprising bonding a first track to the surface of the elongate metallic body, the first track extending between a first initial area and a first terminal area; bonding a second track to the surface of the elongate metallic body, starting from a part of the elongate body that includes the first terminal area and moving toward the area comprising the first initial area.

2. The method of claim 1 wherein the first initial area and the first terminal area are at opposite ends of the elongate metal component along a longitudinal direction thereof.

3. The method according to claim 1, wherein the elongate body is cylindrical or has an oval cross-section.

4. The method according to claim 1, 2 or 3, where the second track is applied to a side of the elongate body that is diametrically opposite from a side of the elongate body to which the first track has been applied.

5. The method according to any preceding claim, further comprising applying tracks so that some or all of the tracks overlap with a track that had previously been applied.

6. The method according to any preceding claim, wherein the tracks are applied so that substantially an entire surface of the elongate body is covered by tracks.

7. The method according to any preceding claim, wherein the elongate metallic body is a shackle of a security device.

8. The method according to claim 7, wherein the tracks are applied so that substantially an entire surface of the elongate body exposed to the potential of an angle grinder attack is covered by tracks.

9. A security device comprising an elongated component made using a method according to any preceding claim.

10. A security device according to Claim 9, wherein the security device is a padlock, a D-lock, a U-Lock or a single leg stud type locks.

11. A computer-readable medium storing data which defines a digital representation of the security device of claim 9 or 10.

12. The computer-readable medium of claim 11, further storing computer program instructions configured to cause an additive manufacturing machine to apply the plurality of tracks to the elongate metallic body when executed by the additive manufacturing machine.
